# EUROPEAN PATENT SPECIFICATION

(11) **EP 1 605 165 B1**
(45) Date of publication and mention of the grant of the patent: **22.04.2009**
(21) Application number: 05011768.8
(22) Date of filing: 31.05.2005
(51) Int. Cl.: F04B 43/02, F04B 43/00

(54) **Diaphragm pump**
Membranpumpe
Pompe à diaphragme

(30) Priority: 01.06.2004 JP 2004163518
(43) Date of publication of application: 14.12.2005
(73) Proprietor: KABUSHIKI KAISHA TOYOTA JIDOSHOKKI, Kariya-shi, Aichi-ken (JP)
(72) Inventor: Yamamoto, Shinya, Kariya-shi Aichi-ken (JP); Yoshikawa, Makoto, Kariya-shi Aichi-ken (JP); Mishina, Takao, Kariya-shi Aichi-ken (JP); Kuwahara, Mamoru, Kariya-shi Aichi-ken (JP)
(74) Representative: TBK-Patent

(56) References cited:
- GB-A- 1 197 226
- GB-A- 2 126 665
- US-A- 4 993 925

## Description

### BACKGROUND OF THE INVENTION

The present invention relates to a diaphragm pump that performs a pumping action by deforming a diaphragm thereof.

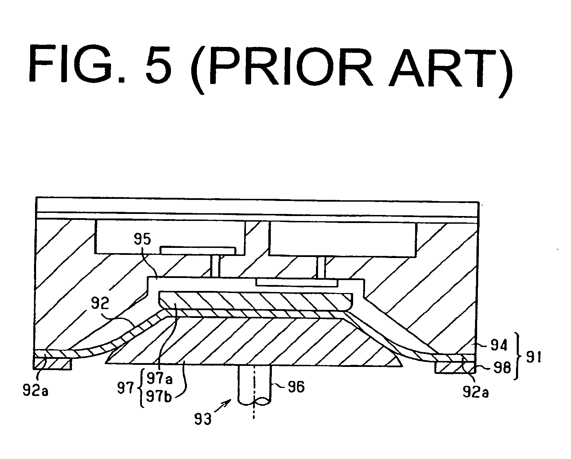

Unexamined Japanese Utility Model Application Publication No. 7-14179 discloses a typical diaphragm pump. As shown in FIG. 5 that shows this conventional diaphragm pump, it includes a diaphragm case 91, a diaphragm 92 and a driver 93. The diaphragm case 91 includes a block 94 and a tension plate 98 fixed to the block 94. The outer peripheral portion 92a of the diaphragm 92 is held between the block 94 and the tension plate 98. A pump chamber 95 is defined by the diaphragm 92 and the block 94.

The driver 93 includes a rod 96 that is reciprocated by the operation of a drive source (not shown) such as an electric motor and a support portion 97 that connects the rod 96 to the center portion of the diaphragm 92. The support portion 97 includes a first support member 97a that is located on the surface of the diaphragm 92 on one side thereof, or upper surface as seen in FIG. 5, so as to face a part of the upper surface of the diaphragm 92 and a second support member 97b that is located on the surface of the diaphragm on the other side thereof, or lower surface in FIG. 5, so as to face a part of the lower surface of the diaphragm 92. The diaphragm 92 is held at its center portion by the support portion 97 between the first and second support members 97a, 97b.

The diaphragm 92 is deformed or displaced in accordance with the reciprocation of the rod 96, thereby increasing and decreasing the volume of the pump chamber 95. During the suction stroke of the diaphragm 92, the volume of the pump chamber 95 is increased and a fluid is drawn into the pump chamber 95. During the discharge stroke, the volume of the pump chamber 95 is decreased and the fluid is discharged out of the pump chamber 95.

Meanwhile, in the above conventional diaphragm pumps, the diaphragm 92 is held at the outer peripheral portion 92a thereof by the diaphragm case 91 and at the center portion thereof by the support portion 97 of the driver 93. Thus, stress caused by this holding or compression is constantly applied to portions (held portions) of the diaphragm 92 that are held by the diaphragm case 91 and the support portion 97. Additionally, an excessive stress is concentrated to the above held portions of the diaphragm 92 and the boundary between the held portions and the non-held portion of the diaphragm 92 due to the tensile force caused by the deformation of the diaphragm 92. Since excessive load is applied to the diaphragm 92 as described above, the lifetime of the diaphragm 92 is shortened.

In addition to the above-described diaphragm pump in which the diaphragm is deformed directly by the driver as shown in FIG. 5, a diaphragm pump of the type in which a back pressure chamber is formed on the side of a diaphragm opposite to a pump chamber and the diaphragm is deformed by varying the pressure in the back pressure chamber is known. In such diaphragm pump, the outer peripheral portion of the diaphragm is held by the diaphragm case, so that the same problem as that described above has occurred.

Another prior art diaphragm pump is disclosed in US 4 993 925.

The present invention is directed to a diaphragm pump that improves the lifetime of a diaphragm thereof.

### SUMMARY OF THE INVENTION

The present invention provides the following feature. A diaphragm pump for pumping a fluid includes a diaphragm that has a first surface and a second surface. The diaphragm is deformed thereby performing a pumping action. The pump also includes a support portion for supporting the diaphragm. The support portion includes a first supporting surface for supporting the first surface and a second supporting surface for supporting the second surface. The support portion allows the diaphragm to slidingly move along an interval between the first and second supporting surfaces when the diaphragm is deformed.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a cross-sectional view of a diaphragm pump of a first preferred embodiment according to the present invention;
FIG. 2A is a partially enlarged cross-sectional view of the diaphragm pump of FIG. 1;
FIG. 2B is a partially enlarged cross-sectional view of the diaphragm pump of the first preferred embodiment when a diaphragm is deformed;
FIG. 3A is a cross-sectional view of a diaphragm pump of a second preferred embodiment according to the present invention;
FIG. 3B is a partially enlarged cross-sectional view of the diaphragm pump of FIG. 3A;
FIG. 4A is a cross-sectional view of a diaphragm pump of an alternative embodiment according to the present invention;
FIG. 4B is a partially enlarged cross-sectional view of the diaphragm pump of FIG. 4A showing a support portion of a diaphragm case;
FIG. 4C is a partially enlarged cross-sectional view of the diaphragm pump of FIG. 4A showing a support portion of a driver; and
FIG. 5 is a cross-sectional view of a diaphragm pump according to prior art.

### DETAILED DESCRIPTION OF THE PREFERRED EMBODIMENTS

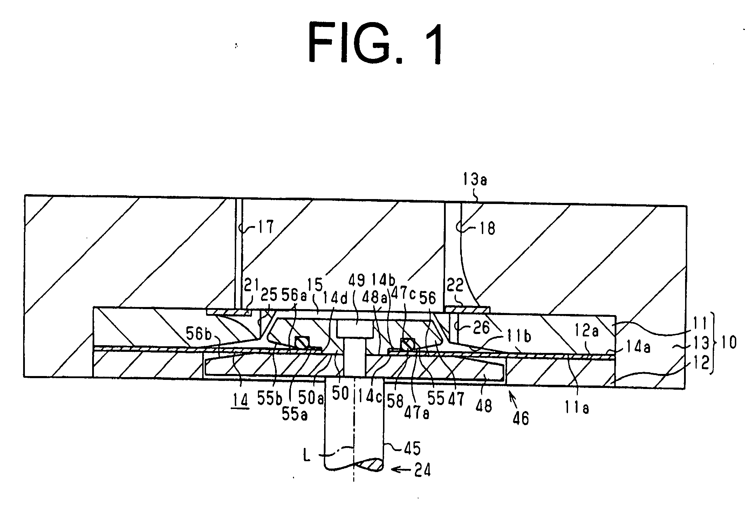

A first preferred embodiment will be described. Firstly, the structure of a diaphragm pump (referred to merely as "pump" hereinafter) will be described. Referring to FIG. 1 that shows a cross-sectional view of the pump, the pump includes a diaphragm case 10, a diaphragm 14 supported by the diaphragm case 10, and a driver 24 connected to the diaphragm 14.

The driver 24 is reciprocated thereby to deform or displace the diaphragm 14, so that the pump performs a pumping action that causes a fluid (or a gas in the present preferred embodiment) to be drawn into and discharged out of the pump.

The diaphragm case 10 includes a block 11, an annular tension plate 12 that is fixedly joined to the block 11, and a body case 13. The block 11, the tension plate 12 and the diaphragm 14 are accommodated in the body case 13. The body case 13 is formed in a cylindrical shape and has a cover 13a located on the top thereof as seen in FIG. 1. The block 11 and the tension plate 12 are arranged in the body case 13 such that the block 11 is located adjacent to the cover 13a. The block 11 and the tension plate 12 are fixed to each other and also to the body case 13 by fixing means such as bolt (not shown).

The diaphragm 14 is made of a metal and has a disc shape with a uniform thickness. The diaphragm 14 has a flexibility as is generally known. The diaphragm 14 is fixed to the diaphragm case 10 with annular region of the outer peripheral portion 14a held between the block 11 and the tension plate 12. Annular region of a planar supporting surface 11a formed on the block 11 is in pressing contact with the outer peripheral portion 14a of a first surface 14b (or an upper surface as seen in FIG. 1) of the diaphragm 14. Annular region of a planar supporting surface 12a formed on the tension plate 12 is in pressing contact with the outer peripheral portion 14a of a second surface 14c (or a lower surface in FIG 1) of the diaphragm 14.

The block 11 has a hole 11b, which is extending therethrough from the end face thereof adjacent to the tension plate 12 toward the cover 13a of the body case 13, at the center portion thereof. The hole 11 b is opened radially inner than the supporting surface 11 a of the block 11 at the end face of the block 11 adjacent to the tension plate 12. The hole 11 b is closed at the opposite openings thereof by the cover 13a of the body case 13 and the diaphragm 14, respectively. Thus the internal space of the hole 11 b being enclosed and defining a pump chamber 15.

The body case 13 of the diaphragm case 10 has a suction passage 17 to which an external low-pressure piping (not shown) is connected, and a discharge passage 18 to which an external high-pressure piping (not shown) is connected. The block 11 has a suction port 25 that connects the pump chamber 15 and the suction passage 17, and a discharge port 26 that connects the pump chamber 15 and the discharge passage 18. A suction valve 21 in the form of a reed valve is provided between the suction port 25 in the block 11 and the suction passage 17 in the body case 13. A discharge valve 22 in the form of a reed valve is provided between the discharge port 26 in the block 11 and the discharge passage 18 in the body case 13.

The driver 24 includes a rod 45 connected to a drive source (not shown) such as an electric motor via a power transmission mechanism (not shown, e.g. a mechanism that converts rotation of the electric motor into reciprocating movement of the rod 45), and a support portion 46 that connects the rod 45 to the center of the diaphragm 14. The rod 45 is reciprocated along the longitudinal axis L thereof (or the vertical direction as seen in FIG. 1) by the operation of the drive source. As the rod 45 is reciprocated, the diaphragm 14 is deformed, or displaced, thereby changing the volume of the pump chamber 15.

The following will describe in detail the manner in which the volume of the pump chamber 15 is changed. When the rod 45 is moved away from the pump chamber 15 (or downward as seen in FIG. 1), the diaphragm 14 is deformed away from the pump chamber 15 and the volume of the pump chamber 15 is increased, accordingly. During this suction stroke, the diaphragm 14 is deformed away from the pump chamber 15 and a gas is drawn through the suction passage 17 into the pump chamber 15 while pushing open the suction valve 21. On the other hand, when the rod 45 is moved toward the pump chamber 15 (or upward as seen in FIG 1), the diaphragm 14 is deformed toward the pump chamber 15 and the volume of the pump chamber 15 is decreased. During this discharge stroke, the diaphragm 14 is deformed toward the pump chamber 15 and the gas in the pump chamber 15 is discharged through the discharge passage 18 while pushing open the discharge valve 22.

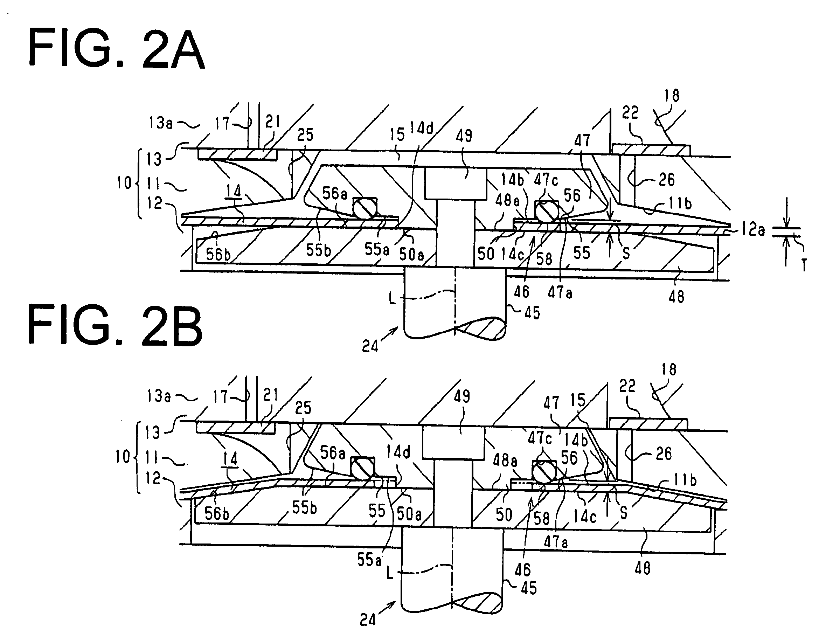

The following will describe the structure in which the diaphragm 14 and the driver 24 are connected to each other. As shown in FIG. 2A, the diaphragm 14 has a hole 14d extending from the first surface 14b of the diaphragm 14 to the second surface 14c. The support portion 46 of the driver 24 is inserted into the diaphragm 14 through the hole 14d of the diaphragm 14. The support portion 46 includes a substantially disc-shaped first support member 47 that is located in the pump chamber 15, or on the side of the first surface 14b of the diaphragm 14, and a substantially disc-shaped second support member 48 that is located outside the pump chamber 15, or on the side of the second surface 14c of the diaphragm 14. The first and second support members 47, 48 are coaxial with each other. The second support member 48 is coaxially fixed to the end of the rod 45.

The first support member 47 includes a spacer 50 disposed to contact with the second support member 48. The spacer 50 is cylindrical and protrudes toward the second support member 48 from the center portion of the end face 47a of the first support member 47 adjacent to the diaphragm 14. The end surface 50a of the spacer 50 lies on a plane perpendicular to the axis L. The spacer 50 is inserted into the diaphragm 14 through the hole 14d, and the end surface 50a thereof is in contact with the center of the end face 48a of the second support member 48. Thus, the first support member 47 is directly joined to the second support member 48 through the hole 14d of the diaphragm 14. The first support member 47 is fixed to the second support member 48 by a bolt 49 that is inserted through the centers of the first and second support members 47, 48.

The region that excludes the spacer 50 from the end face 47a provides a first supporting surface 55. The first supporting surface 55 faces the first surface 14b of the diaphragm 14 in the region thereof around the hole 14d. The first supporting surface 55 serves to support the first surface 14b of the diaphragm 14 during the reciprocating movement of the rod 45 (specifically during the suction stroke of the diaphragm 14). The first supporting surface 55 has an annular planar region 55a adjacent to the spacer 50 and an annular inclined region 55b which is located adjacent to and radially outer than the annular planar region 55a. The planar region 55a lies on an imaginary plane that is perpendicular to the axis L of the rod 45. The inclined region 55b is inclined with respect to the axis L of the rod 45 so that the outer periphery thereof is the farthest from the imaginary plane on which the planar region 55a lies. The provision of the inclined region 55b in the first supporting surface 55 prevents application of an excessive bending load to a part of the diaphragm 14, more specifically the boundary between the part of the diaphragm 14 which is supported by the first supporting surface 55 and the part of the diaphragm 14 which is not supported by the first supporting surface 55, when the diaphragm 14 is located at its bottom dead center (or the turning point from the suction stroke to the discharge stroke of the diaphragm 14). Thus, the lifetime of the diaphragm 14 is extended.

The region that excludes a contacting portion contacting to the spacer 50 from the end face 48a provides a second supporting surface 56. The second supporting surface 56 faces the second surface 14c of the diaphragm 14 around the hole 14d and serves to support the second surface 14c of the diaphragm 14 during the reciprocating movement of the rod 45 (more specifically during the discharge stroke of the diaphragm 14). The second supporting surface 56 has an annular planar region 56a which is adjacent to the contacting portion and an annular inclined region 56b which is adjacent to and radially outer than the annular planar region 56a. The planar region 56a lies on an imaginary plane that is perpendicular to the axis L of the rod 45. The contacting portion also lies on the same imaginary plane. The inclined region 56b is inclined with respect to the axis L of the rod 45 so that the outer periphery thereof is the farthest from the imaginary plane on which the planar region 56a lies. The provision of the inclined region 56b in the second supporting surface 56 prevents application of an excessive bending load to a part of the diaphragm 14, more specifically the boundary between the part of the diaphragm 14 which is supported by the second supporting surface 56 and the part of the diaphragm 14 which is not supported by the second supporting surface 56, when the diaphragm 14 is located at its top dead center (namely, the turning point from the discharge stroke to the suction stroke of the diaphragm 14). Thus, the lifetime of the diaphragm 14 is extended.

The second support member 48 is larger in diameter than the first support member 47. Thus, the radially outer region of the second supporting surface 56 (or most of the annular inclined region 56b) is located radially outer than the first supporting surface 55. Even if the diaphragm 14 is removed, the radially outer region of the second supporting surface 56 does not face the first supporting surface 55. In this case, the entire planar region 55a of the first supporting surface 55 faces the planar region 56a of the second supporting surface 56, but only a part of the planar region 56a (or radially inner part) of the second supporting surface 56 face the planar region 55a of the first supporting surface 55.

The first support member 47 has an annular groove 47c at the boundary between the planar region 55a and the inclined region 55b in the first supporting surface 55. The annular groove 47c is formed to an annular shape with the axis L of the rod 45 as the center thereof. A seal member or an O-ring 58 as a seal means is inserted in the groove 47c in sliding contact with the first surface 14b of the diaphragm 14. Thus, the O-ring 58 prevents the gas from leaking from the pump chamber 15 through between the first supporting surface 55 of the support portion 46 and the first surface 14b of the diaphragm 14, that is, from flowing from the side of the first surface 14b of the diaphragm 14 to the side of the second surface 14c through between the first and second supporting surfaces 55, 56.

Regarding the position of the O-ring 58 or the position where the gas is prevented from leaking from the pump chamber 15, it is better to provide the O-ring 58 between first supporting surface 55 and the first surface 14b of the diaphragm 14 than between the second supporting surface 56 and the second surface 14c of the diaphragm 14. Furthermore, it is preferable that the O-ring 58 provided between the first supporting surface 55 and the first surface 14b of the diaphragm 14 should be positioned as radially outward in the planner region 55a as possible. In the space between the first and second supporting surfaces 55, 56, the region on the side of the pump chamber 15 from the position of the O-ring 58 (or the seal position), that is, on the radially outer side of the O-ring 58, forms a part of the pump chamber 15. This space corresponds to dead volume of the pump chamber 15 (or prevents the minimum volume of the pump chamber 15 from being zero) when the diaphragm 14 is located at its top dead center. If the dead volume of the pump chamber 15 is larger, the amount of residual gas that is not discharged from the pump chamber 15 and that remains in the pump chamber 15 is larger. Therefore, the residual gas may reexpand in the pump chamber 15, with the result that the efficiency of the pump deteriorates. If the O-ring 58 is positioned as radially outward in the planner region 55a as possible between the first supporting surface 55 and the first surface 14b of the diaphragm 14, the dead volume of the pump chamber 15 is smaller, thus further improving the efficiency of the pump. In this view, it is more effective to position the O-ring 58 at the boundary between the planar region 55a and the inclined region 55b of the first supporting surface 55 as in the present preferred embodiment or on the inclined region 55b than on the planar region 55a (considered as an alternative embodiment of the present preferred embodiment) or between second supporting surface 56 and the second surface 14c of the diaphragm 14 (considered as an alternative embodiment of the present preferred embodiment).

The following will describe the setting of the height of the spacer 50 of the first support member 47, namely, the setting of a minimum value S which is the minimum interval between the first supporting surface 55 and the second supporting surface 56. The height of the spacer 50 refers to the distance between the imaginary plane on which the planar region 55a of the first supporting surface 55 lies and the imaginary plane on which the end surface 50a of the spacer 50 lies.

Pressing the first support member 47 against the second support member 48 at the spacer 50 by tightening the bolt 49, the spaced distance between the first and second supporting surfaces 55, 56 is set at its minimum value S which corresponds to the height of the spacer 50. In this preferred embodiment, the height of the spacer 50, that is, the minimum value S, more specifically the interval between the planar region 55a of the first supporting surface 55 and the planar region 56a of the second supporting surface 56 is set at or greater than a thickness T of the diaphragm 14 between the first and second supporting surfaces 55, 56. By so setting, the diaphragm 14 is not held strongly between the planar region 55a of the first supporting surface 55 and the planar region 56a of the second supporting surface 56 even when the bolt 49 is tightened fast.

In this preferred embodiment, the minimum value S is set greater than the thickness T of the diaphragm 14. Namely, the minimum value S is so set that a gap is made at least either between the planar region 55a of the first supporting surface 55 and the first surface 14b of the diaphragm 14 or between the planar region 56a of the second supporting surface 56 and the second surface 14c of the diaphragm 14.

When the diaphragm 14 is changed from the state shown in FIG. 2A to state that shown in FIG. 2B, that is, when the diaphragm 14 increases the amount of its deformation, tensile force is applied to the diaphragm 14, which is then slidingly moved along the interval between the first and second supporting surfaces 55, 56 away from the axis L of the rod 45, as clearly shown in FIG. 2B. On the other hand, when the diaphragm 14 is changed from the state of FIG. 2B to that of FIG. 2A, that is, when the diaphragm 14 decreases the amount of its deformation, the diaphragm 14 is slidingly moved along the interval between the first and second supporting surfaces 55, 56 toward the axis L of the rod 45).

According to the above-described preferred embodiment, the following advantageous effects are obtained.
(1) Since the diaphragm 14 is not held tight between the first and second supporting surfaces 55, 56, the diaphragm 14 is not applied to a stress which is due to tight holding. When tensile force is applied to the diaphragm 14 to increase the amount of its deformation, the diaphragm 14 is slidingly moved along the interval between the first and second supporting surfaces 55, 56. Thus, application of excessive tensile force to the diaphragm 14 is prevented and, therefore, the lifetime of the diaphragm 14 is extended.
(2) The minimum value S is set at or greater than the thickness T of the diaphragm 14 between the first and second supporting surfaces 55, 56. By so setting, the support portion 46 does not hold the diaphragm 14 tight and allows the sliding movement of the diaphragm 14.
   In this preferred embodiment, the minimum value S is set greater than the thickness T of the diaphragm 14 between the first and second supporting surfaces 55, 56. Thus, the support portion 46 does not hold the diaphragm 14 tight and allows smooth sliding movement thereof. Accordingly, the diaphragm 14 is prevented from being subjected to excessive tensile force, and the lifetime of the diaphragm 14 is further extended.
(3) The first support member 47 includes the spacer 50 between the first and second support members 55, 56 for determining the interval between the first and second supporting surfaces 55, 56. Thus, the provision of the spacer 50 prevents the interval (more specifically the minimum value S thereof) between the first and second supporting surfaces 55, 56 from becoming smaller than a desired value. By providing the spacer 50, control of the minimum interval (more specifically the minimum value S) between the first and second support members 55, 56 is facilitated in comparison with the case when the support portion does not include the spacer 50. Thus, when the diaphragm 14 is deformed, the diaphragm 14 is slidingly moved smoothly between the first and second supporting surfaces 55, 56, with the result that application of excessive tensile force to the diaphragm 14 is more effectively prevented.
(4) Since the spacer 50 is provided integrally with the first support member 47, the number of component parts of the support portion 46 can be reduced, and the process of assembling the pump can be simplified.
(5) The O-ring 58 is provided between the first supporting surface 55 of the support portion 46 and the first surface 14b of the diaphragm 14 for preventing the gas from leaking from the pump chamber 15. Even though the support portion 46 is formed so as to allow the diaphragm 14 to slidingly move between the first and second supporting surfaces 55, 56, the deterioration of the efficiency of the pump is prevented by the provision of such O-ring.

The following will describe a pump of a second preferred embodiment. The differences from the pump of the first preferred embodiment will be described. Like or same elements are referred to by the same reference numerals as those which have been used in describing the pump of the first preferred embodiment, and the description thereof is not reiterated.

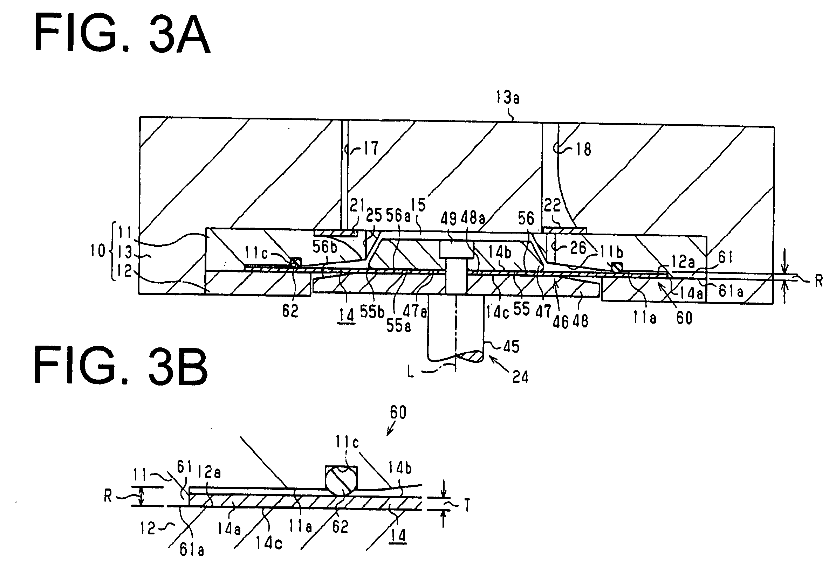

As shown in FIGS. 3A and 3B, the pump of the second preferred embodiment differs from the pump of the first preferred embodiment in that the spacer 50 is removed from the first support member 47 and also that the groove 47c and the inclined region 55a are removed from the first supporting surface 55, and the O-ring 58 is removed from between the first and second support members 47, 48. Thus, the radially inner portion of the diaphragm 14 is held relatively strongly between the planar region 55a of the first supporting surface 55 and the planar region 56a of the second supporting surface 56. Namely, the support portion 46 of the driver 24 is connected to the diaphragm 14 in the same manner as the conventional pump. The diaphragm case 10 includes a support portion 60 with a structure for allowing the sliding movement of the diaphragm 14.

The support portion 60 of the diaphragm case 10 includes a block or a first support member 11 and a tension plate or a second support member 12. The block 11 has a first supporting surface 11 a, and the tension plate 12 has a second supporting surface 12a which is parallel to the first supporting surface 11a. The first and second supporting surfaces 11a, 12a lie on imaginary planes perpendicular to the axis L of the rod 45, respectively. An annular (peripheral-wall-shaped) spacer 61 is formed integrally with the block 11 on the radially outer side of the first supporting surface 11a. The spacer 61 has an end surface 61 a which lies on an imaginary plane perpendicular to the axis L of the rod 45. The spacer 61 is joined to the tension plate 12 with the end surface 61 a. The end surface 61a is in contact with the surface of the tension plate 12, is located radially outer than the second supporting surface 12a and lies in the same plane as the second supporting surface 12a.

An annular groove 11c with the axis L of the rod 45 as the center thereof is formed in the first supporting surface 11a. A seal member or an O-ring 62 as a seal means is inserted in the groove 11c in contact with the first surface 14b of the diaphragm 14. The groove 11c is preferably formed in the first supporting surface 11 a at a position which is close to the axis L of the rod 45 for reducing the dead volume of the pump chamber 15 thereby to improve the efficiency of the pump. The O-ring 62 prevents the gas from leaking from the pump chamber 15 through between the first supporting surface 11a of the support portion 60 and the first surface 14b of the diaphragm 14, that is, from flowing from the side of the first surface 14b of the diaphragm 14 to the side of the second surface 14c through between the first and second supporting surfaces 11 a, 12a.

The height of the spacer 61, namely, a minimum value R which is the minimum interval between the first and second supporting surfaces 11a, 12a is set at or greater than a thickness T of the diaphragm 14 between the first and second supporting surfaces 11a, 12a, so that the diaphragm 14 is not held strongly between the first and second supporting surfaces 11a, 12a. Since the first and second supporting surfaces 11a, 12a are disposed parallel to each other, the interval between the first and second supporting surfaces 11 a, 12a is considered as the minimum value R throughout the range for the interval. More specifically, the minimum value R is set greater than the thickness T of the diaphragm 14 in this preferred embodiment. Namely, the minimum value R is so set that a gap is made at least either between the first supporting surface 11 a and the first surface 14b of the diaphragm 14 or between the second supporting surface 12a and the second surface 14c of the diaphragm 14.

When the diaphragm 14 increases the amount of its deformation, the tensile force is applied to the diaphragm 14 and the diaphragm 14 is moved slidingly between the first and second supporting surfaces 11a, 12a toward the axis L of the rod 45. On the other hand, when the diaphragm 14 decreases the amount of its deformation, the diaphragm 14 is moved back slidingly between the first and second supporting surfaces 11a, 12a away from the axis L of the rod 45. According to the second preferred embodiment, substantially the same advantageous effects as those in the above-described first preferred embodiment are obtained.

The above-described first and second preferred embodiments are merely examples of the present invention and may be modified without departing from the purpose of the invention. The following alternative embodiments are also practicable. Any combination of the following alternative embodiments is practiced unless the alternative embodiments for the combination are inconsistent with each other.

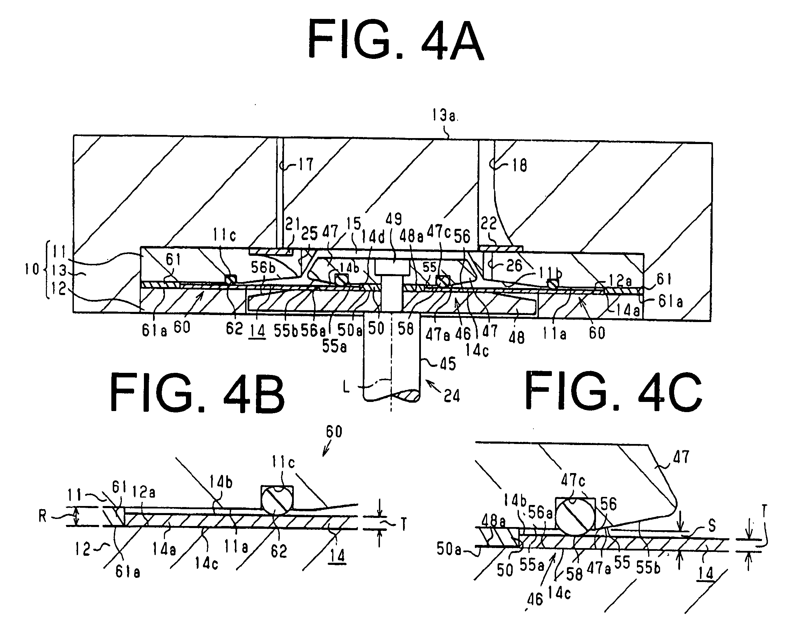

FIGS. 4A through 4C show an embodiment in which the characterizing features of the first and second preferred embodiments are combined. Namely, the driver 24 includes the support portion 46, and the diaphragm case 10 includes the support portion 60. Thus, the diaphragm 14 is slidingly movable both at the support portion 46 of the driver 24 and at the support portion 60 of the diaphragm case 10 when the diaphragm 14 is deformed. In addition, the spacer 50 is provided separately from the first and second support members 47, 48, and the spacer 61 is provided independently of the block 11 and the tension plate 12 to adjust the gap between the planner region 55a and the first surface 14b and the between the first supporting surface 11a and the first surface 14b more exactly.

In the above-described first preferred embodiment, the spacer 50 may be integral with the second support member 48 and in contact with the first support member 47. In the above-described second preferred embodiment, the spacer 61 may be integral with the tension plate 12 and in contact with the block 11.

In the above-described first preferred embodiment, the minimum value S which is the minimum interval between the first and second supporting surfaces 55, 56 may be set slightly smaller (at most 10%) than the thickness T of the diaphragm 14 provided between the first and second supporting surfaces 55, 56. In the above-described second preferred embodiment, the minimum value R which is the minimum interval between the first and second supporting surfaces 11 a, 12a may be set slightly smaller (at most 10%) than the thickness T of the diaphragm 14 provided between the first and second supporting surfaces 11a, 12a. As long as the diaphragm 14 is allowed to slidingly move between the first and second surfaces 11, 12a when it is deformed, the diaphragm 14 may be directly held between the planar region 55a of the first supporting surface 55 and the planar region 56a of the second supporting surface 56 or between the first and second supporting surfaces 11 a, 12a.

In the above-described first preferred embodiment, the block 11 and the tension plate 12 may be loosely joined to each other, for example, the block 11 and the tension plate 12 are fastened by tightening loosely the bolt (not shown) so as to allow the diaphragm 14 to slidingly move between the supporting surfaces 11a, 12a when the diaphragm 14 is deformed. In the above-described second preferred embodiment, the bolt 49 is tightened loosely to allow the diaphragm 14 to slidingly move between and along the first and second supporting surfaces 55, 56 when the diaphragm 14 is deformed.

In the above-described first and second preferred embodiments, a seal means (e.g. O-ring) may be provided between the second supporting surface 56 and the second surface 14c of the diaphragm 14. A lip seal may be used as the seal means.

The above-described first preferred embodiment may dispense with the O-ring 58. Likewise, the above-described second preferred embodiment may dispense with the O-ring 62.

The present invention is applicable also to a diaphragm pump of the type that it does not has a driver such as the driver 24 of the above-described first and second preferred embodiments, a back pressure chamber is formed on the side of a diaphragm opposite to a pump chamber, and also that the diaphragm is deformed by variation of pressure in the back pressure chamber. The present invention (more specifically the feature of the second preferred embodiment) is also applicable to a diaphragm pump for pumping a liquid.

The present examples and embodiments are to be considered as illustrative and not restrictive, and the invention is not to be limited to the details given herein but may be modified within the scope of the appended claims.

## Claims

1. A diaphragm pump for pumping a fluid, including a diaphragm (14) that has a first surface (14b) and a second surface (14c), the diaphragm (14) being deformed thereby performing a pumping action, the pump also including a support portion (11, 12, 46, 47, 48, 60) for supporting the diaphragm (14), the support portion including a first supporting surface (11a, 47a, 55) for supporting the first surface (14b) and a second supporting surface (12a, 48a, 56) for supporting the second surface(14c),
**characterized in that**
the support portion (11, 12, 46, 47, 48, 60) allows the diaphragm (14) to slidingly move along an interval between the first and second supporting surfaces (11a, 12a, 47a, 48a, 55, 56) when the diaphragm (14) is deformed.

2. The diaphragm pump according to claim 1, further comprising a driver (24) connected to the diaphragm (14) via the support portion (46, 47, 48), the driver (24) being reciprocated to deform the diaphragm (14), the support portion (46, 47, 48) being a component of the driver (24).

3. The diaphragm pump according to claim 2, further comprising another support portion (11, 12, 60) formed in a diaphragm case (10) for supporting the diaphragm (14) to allow a sliding movement of the diaphragm (14) when the diaphragm (14) is deformed.

4. The diaphragm pump according to claim 1, further comprising a diaphragm case (10) for accommodating the diaphragm (14), the diaphragm (14) having an outer peripheral portion (14a), the support portion (11, 12, 60) being a component of the diaphragm case (10) for supporting the diaphragm (14) at the outer peripheral portion (14a) thereof.

5. The diaphragm pump according to any one of claims 1 through 4, wherein a minimum value of the interval (S, R) between the first and second supporting surfaces (11a, 12a; 47a, 48a, 55, 56) is set at or greater than a thickness of the diaphragm (14).

6. The diaphragm pump according to any one of claims 1 through 5, wherein the support portion (11, 12; 46, 47, 48, 60) includes a first support member (11; 47) having the first supporting surface (11a; 47a, 55) and a second support member (12; 48) having the second supporting surface (12a; 48a, 56), the first and second support members (11, 12; 47, 48) being fixedly joined to each other, the support portion (11, 12; 46, 47, 48, 60) including a spacer (50; 61) between the first and second supporting surfaces (11a, 12a; 47a, 48a, 55, 56) for determining the interval between the first and second supporting surfaces (11a, 12a; 47a, 48a, 55, 56).

7. The diaphragm pump according to claim 6, wherein the spacer (50; 61) is formed integral with one of the first and second support members (11, 12; 47, 48), the spacer (50; 61) being in contact with the other of the first and second support members (11, 12; 47, 48).

8. The diaphragm pump according to any one of claims 1 through 7, wherein a seal means (58; 62) is provided at least either between the first supporting surface (11a; 47a, 55) of the support portion (11, 12; 46, 47, 48, 60) and the first surface (14b) of the diaphragm (14) or between the second supporting surface (12a; 48a, 56) of the support portion (11, 12; 46, 47, 48, 60) and the second surface (14c) of the diaphragm (14).

9. The diaphragm pump according to claim 8, wherein a pump chamber (15) is defined on the side of the first surface (14b) of the diaphragm (14), the pump chamber (15) being changed in volume by the deformation of the diaphragm (14), the seal means (58; 62) being provided at least between the first supporting surface (11a; 47a, 55) of the support portion (11, 12; 46, 47, 48, 60) and the first surface (14b) of the diaphragm (14) for preventing the fluid from flowing from the pump chamber (15).

10. The diaphragm pump according to any one of claims 8 and 9, wherein the seal means (58; 62) is an O-ring.

11. The diaphragm pump according to claim 9, wherein the seal means (58, 62) is provided only between the first supporting surface (11a, 47a, 55) of the support portion (11, 46, 47, 60) and the first surface (14b) of the diaphragm (14).

12. The diaphragm pump according to claim 11, wherein the seal means (58, 62) is located near the boundary between the first supporting surface (11a, 47a, 55) of the support portion (11, 46, 47, 60) and the pump chamber (15).

13. The diaphragm pump according to any one of claims 1 through 12, wherein the second supporting surface (12a, 48a, 55) includes a planar region (55a) which contacts to the second surface (14c) by plane contact.

14. The diaphragm pump according to claims 13, wherein the support portion (11, 12, 46, 47, 48, 60) is formed on a driver (24) for driving the diaphragm (14), the support portion (12, 46, 48, 60) of the driver (24) including an inclined region (55b) adjacent to the planar region (55a).

## Patentansprüche

1. Membranpumpe zum Pumpen eines Fluids, mit einer Membran (14), die eine erste Oberfläche (14b) und eine zweite Oberfläche (14c) aufweist, wobei die Membran (14) verformt wird, wodurch ein Pumpen durchgeführt wird, wobei die Pumpe zudem einen Stützabschnitt (11, 12, 46, 47, 48, 60) zum Stützen der Membran (14) aufweist, wobei der Stützabschnitt eine erste Stützfläche (11a, 47a, 55) zum Stützen der ersten Oberfläche (14b) und eine zweite Stützfläche (12a, 48a, 56) zum Stützen der zweiten Oberfläche (14c) aufweist,
**dadurch gekennzeichnet, dass**
der Stützabschnitt (11, 12, 46, 47, 48, 60) es der ersten Membran (14) ermöglicht, sich gleitend entlang einem Abstand zwischen der ersten und der zweiten Stützfläche (11a, 12a, 47a, 48a, 55, 56) zu bewegen, wenn die Membran (14) verformt wird.

2. Membranpumpe nach Anspruch 1, die des Weiteren einen Mitnehmer (24) aufweist, der mit den Membran (14) über den Stützabschnitt (46, 47, 48) verbunden ist, wobei der Mitnehmer (24) hin- und herbewegt wird, um die Membran (14) zu verformen, wobei der Stützabschnitt (46, 47, 48) eine Komponente des Mitnehmers (24) ist.

3. Membranpumpe nach Anspruch 2, die des Weiteren einen weiteren Stützabschnitt (11, 12, 60) aufweist, der in einem Membrangehäuse (10) zum Stützen der Membran (14) ausgebildet ist, um eine Gleitbewegung der Membran (14) zu ermöglichen, wenn die Membranklammer (14) verformt wird.

4. Membranpumpe nach Anspruch 1, die des Weiteren ein Membrangehäuse (10) zur Aufnahme der Membran (14) aufweist, wobei die Membran (14) einen Außenumfangsabschnitt (14a) aufweist, wobei der Stützabschnitt (11, 12, 60) eine Komponente des Membrangehäuses (10) zum Stützen der Membran (14) an deren Außenumfangsabschnitt (14a) ist.

5. Membranpumpe nach einem der Ansprüche 1 bis 4, wobei ein minimaler Wert des Abstands (S, R) zwischen der ersten und der zweiten Stützfläche (11a, 12a; 47a, 48a, 55, 56) gleich oder größer als eine Dicke der Membran (14) festgesetzt ist.

6. Membranpumpe nach einem der Ansprüche 1 bis 5, wobei der Stützabschnitt (11, 12; 46, 47, 48, 60) ein erstes Stützbauteil (11; 47), das die erste Stützfläche (11a; 47a, 55) aufweist, und ein zweites Stützbauteil (12; 48) umfasst, das die zweite Stützfläche (12; 48, 56) aufweist, wobei das erste und das zweite Stützbauteil (11, 12; 47, 48) fest miteinander verbunden sind, wobei der Stützabschnitt (11, 12; 46, 47, 48, 60) einen Abstandshalter (50; 61) zwischen der ersten und der zweiten Stützfläche (11a, 12a; 47a, 48a, 55, 56) zum Festlegen des Abstands zwischen der ersten und der zweiten Stützfläche (11a, 12a; 47a, 48a, 55, 56) aufweist.

7. Membranpumpe nach Anspruch 6, wobei der Abstandshalter (50; 61) einstückig mit einem von dem ersten und den zweiten Stützbauteil (11, 12; 47, 48) ausgebildet ist, wobei der Abstandshalter (50; 61) mit dem anderen von dem ersten und dem zweiten Stützbauteil (11, 12; 47, 48) in Kontakt steht.

8. Membranpumpe nach einem der Ansprüche 1 bis 7, wobei eine Dichtungseinrichtung (58; 62) an wenigstens einer von der ersten Stützfläche (11a; 47a, 55) des Stützabschnitts (11, 12; 46, 47, 48, 60) und der ersten Oberfläche (14b) der Membran (14) oder zwischen der zweiten Stützfläche (12a; 48a, 56) des Stützabschnitts (11, 12; 46, 47, 48, 60) und der zweiten Oberfläche (14c) der Membran (14) vorgesehen ist.

9. Membranpumpe nach Anspruch 8, wobei eine Pumpenkammer (15) auf der Seite der ersten Oberfläche (14b) der Membran (14) festgelegt ist, wobei das Volumen der Pumpenkammer (15) durch die Verformung der Membran (14) verändert wird, wobei die Dichtungseinrichtung (58; 62) wenigstens zwischen der ersten Stützfläche (11a; 47a, 55) des Stützabschnitts (11, 12; 46, 47, 48, 60) und der ersten Oberfläche (14b) der Membran (14) vorgesehen ist, um zu verhindern, dass das Fluid aus der Pumpenkammer (15) strömt.

10. Membranpumpe nach einem der Ansprüche 8 und 9, wobei die Dichtungseinrichtung (58; 62) ein O-Ring ist.

11. Membranpumpe nach Anspruch 9, wobei die Dichtungseinrichtung (58, 62) nur zwischen der ersten Stützfläche (11a, 47a, 55) des Stützabschnitts (11, 46, 47, 60) und der ersten Oberfläche (14b) der Membran (14) vorgesehen ist.

12. Membranpumpe nach Anspruch 11, wobei sich die Dichtungseinrichtung (58, 62) in der Nähe der Grenze zwischen der ersten Stützfläche (11a, 47a, 55) des Stützabschnitts (11, 46, 47, 60) und der Pumpenkammer (15) befindet.

13. Membranpumpe nach einem der Ansprüche 1 bis 12, wobei die zweite Stützfläche (12a, 48a, 55) einen ebenen Bereich (55a) umfasst, der die zweite Oberfläche (14c) durch Flächenkontakt berührt.

14. Membranpumpe nach Anspruch 13, wobei der Stützabschnitt (11, 12, 46, 47, 48, 60) an einem Mitnehmer (24) zum Antreiben der Membran (14) ausgebildet ist, wobei der Stützabschnitt (12, 46, 48, 60) des Mitnehmers (24) einen abgeschrägten Bereich (55b) aufweist, der zu dem ebenen Bereich (55a) benachbart ist.

## Revendications

1. Pompe à diaphragme pour pomper du fluide, incluant un diaphragme (14) qui a une première surface (14b) et une deuxième surface (14c), le diaphragme (14) étant déformé exécutant ainsi une action de pompage, la pompe incluant également une portion de soutien (11, 12, 46, 47, 48, 60) pour soutenir le diaphragme (14), la portion de soutien incluant une première surface de soutien (11a, 47a, 55) pour soutenir la première surface (14b) et une deuxième surface de soutien (12a, 48a, 56) pour soutenir la deuxième surface (14c),
**caractérisée en ce que**
la portion de soutien (11, 12, 46, 47, 48, 60) permet au diaphragme (14) de se déplacer de manière coulissante le long d'un intervalle entre la première et la deuxième surface de soutien (11a, 12a, 47a, 48a, 55, 56) lorsque le diaphragme (14) est déformé.

2. Pompe à diaphragme selon la revendication 1, comprenant en plus un dispositif d'entraînement (24) relié au diaphragme (14) par l'intermédiaire de la portion de soutien (46, 47, 48), le dispositif d'entraînement (24) étant muni d'un mouvement de va-et-vient pour déformer le diaphragme (14), la portion de soutien (46, 47, 48) étant un composant du dispositif d'entraînement (24).

3. Pompe à diaphragme selon la revendication 2, comprenant en plus une autre portion de soutien (11, 12, 60) formée dans un boîtier (10) du diaphragme pour soutenir le diaphragme (14) pour permettre un mouvement coulissant du diaphragme (14) lorsque le diaphragme (14) est déformé.

4. Pompe à diaphragme selon la revendication 1, comprenant en plus un boîtier (10) du diaphragme pour accueillir le diaphragme (14), le diaphragme (14) ayant une portion périphérique externe (14a), la portion de soutien (11, 12, 60) étant un composant du boîtier (10) du diaphragme pour soutenir le diaphragme (14) à la portion périphérique externe (14a) de celui-ci.

5. Pompe à diaphragme selon l'une quelconque des revendications 1 à 4, dans laquelle une valeur minimale de l'intervalle (S, R) entre la première et la deuxième surface de soutien (11a, 12a; 47a, 48a, 55, 56) est établie de manière à être supérieure ou égale à une épaisseur du diaphragme (14).

6. Pompe à diaphragme selon l'une quelconque des revendications 1 à 5, dans laquelle la portion de soutien (11, 12; 46, 47, 48, 60) inclut un premier élément de soutien (11; 47) ayant la première surface de soutien (11a; 47a, 55) et un deuxième élément de soutien (12; 48) ayant la deuxième surface de soutien (12a; 48a, 56), les premier et deuxième éléments de soutien (11, 12; 47, 48) étant liés de manière fixe l'un à l'autre, la portion de soutien (11, 12; 46, 47, 48, 60) incluant une entretoise (50; 61) entre la première et la deuxième surface de soutien (11a, 12a; 47a, 48a, 55, 56) pour déterminer l'intervalle entre la première et la deuxième surface de soutien (11a, 12a; 47a, 48a, 55, 56).

7. Pompe à diaphragme selon la revendication 6, dans laquelle l'entretoise (50; 61) est formée de manière intégrale de l'un des premier et deuxième éléments de soutien (11, 12; 47, 48), l'entretoise (50; 61) étant en contact avec l'autre élément parmi les premier et deuxième éléments de soutien (11, 12; 47, 48).

8. Pompe à diaphragme selon l'une quelconque des revendications 1 à 7, dans laquelle un moyen d'étanchéité (58; 62) est fourni au moins soit entre la première surface de soutien (11a; 47a, 55) de la portion de soutien (11, 12; 46, 47, 48, 60) et la première surface (14b) du diaphragme (14) ou entre la deuxième surface de soutien (12a; 48a, 56) de la portion de soutien (11, 12; 46, 47, 48, 60) et la deuxième surface (14c) du diaphragme (14).

9. Pompe à diaphragme selon la revendication 8, dans laquelle une chambre de pompage (15) est définie sur le côté de la première surface (14b) du diaphragme (14), la chambre de pompage (15) changeant de volume par la déformation du diaphragme (14), le moyen d'étanchéité (58; 62) étant fourni au moins entre la première surface de soutien (11a; 47a, 55) de la portion de soutien (11, 12; 46, 47, 48, 60) et la première surface (14b) du diaphragme (14) pour empêcher que le fluide ne s'écoule depuis la chambre de pompage (15).

10. Pompe à diaphragme selon l'une quelconque des revendications 8 et 9, dans laquelle le moyen d'étanchéité (58; 62) est un joint torique.

11. Pompe à diaphragme selon la revendication 9, dans laquelle le moyen d'étanchéité (58, 62) est fourni seulement entre la première surface de soutien (11a, 47a, 55) de la portion de soutien (11,46,47, 60) et la première surface (14b) du diaphragme (14).

12. Pompe à diaphragme selon la revendication 11, dans laquelle le moyen d'étanchéité (58, 62) est situé près de la limite entre la première surface de soutien (11a, 47a, 55) de la portion de soutien (11,46,47, 60) et la chambre de pompage (15).

13. Pompe à diaphragme selon l'une quelconque des revendications 1 à 12, dans laquelle la deuxième surface de soutien (12a, 48a, 55) inclut une région planaire (55a) qui se met en contact avec la deuxième surface (14c) par un contact plan.

14. Pompe à diaphragme selon la revendication 13, dans laquelle la portion de soutien (11, 12, 46, 47, 48, 60) est formée sur un dispositif d'entraînement (24) pour entraîner le diaphragme (14), la portion de soutien (12, 46, 48, 60) du dispositif d'entraînement (24) incluant une région inclinée (55b) adjacente à la région planaire (55a).
